# EUROPÄISCHE PATENTANMELDUNG

(11) **EP 0 942 567 A2**
(43) Veröffentlichungstag der Anmeldung: **15.09.1999**
(21) Anmeldenummer: 99101660.1
(22) Anmeldetag: 05.02.1999
(51) Int. Cl.: H04L 29/06

(54) **Datenschnittstelle mit kryptografischen Sicherung der Daten**

(30) Priorität: 12.02.1998 DE 19805710
(71) Anmelder: SIEMENS AKTIENGESELLSCHAFT, 80333 München (DE)
(72) Erfinder: Jahnen, Georg, Dr., 85716 Unterschleissheim (DE); Markwitz, Wernhard, Dr., 80469 München (DE)

(57) **Zusammenfassung**

Die Erfindung betrifft eine Datenschnittstelle (DS), insbesondere PCMCIA-Karte, zur Verbindung einer Datenverarbeitungseinrichtung (LP) über eine nachgeschaltete Luftschnittstelle (ME) mit einem drahtlosen Kommunikationsnetz (MN). Erfindungsgemäß sind Mittel zur Unterstützung einer transparenten Datenverbindung zu einem Kommunikationsteilnehmer und Mittel zur kryptografischen Sicherung (SE) der Daten vorgesehen.

## Beschreibung

Die Erfindung betrifft eine Datenschnittstelle gemäß dem Oberbegriff des Patentanspruchs 1 beziehungsweise 2.

Eine solche Datenschnittstelle ist beispielsweise eine PCMCIA-Karte, die zur Datenübertragung in Mobilfunknetzen verwendet wird. Hierbei wird eine mobile Datenverarbeitungseinrichtung, beispielsweise ein Laptop, über diese PCMCIA-Karte mit einem Mobilfunkendgerät, einem sogenannten Handy, verbunden. Die PCMCIA-Karte wird in eine Aufnahmevorrichtung des Laptops gesteckt und über eine flexible Leitung an einer entsprechenden Schnittstelle des mobilen Endgerätes angeschaltet. Die PCMCIA-Karte als Datenschnittstelle ist nicht standardisiert.

Bei einer Datenübertragung vom Laptop aus in ein analoges Teilnehmernetz wird beispielsweise die PCMCIA-Karte mit einem an sich für Modem-Karten bekannten a/b-Adapter ausgestattet.

Häufig benötigen Mitarbeiter auch ausserhalb des Firmengeländes einen Zugriff auf die zentrale Datenhaltung eines Unternehmens. Dies geschieht im allgemeinen über einen Personalcomputer, der mit einem Modem über das öffentliche Netz mit einem Rechner im Unternehmer, einem sogenannten Server, kommuniziert. Bei einem mobilen Einsatz werden zunehmend tragbare Rechner, beispielsweise Laptops oder Notebooks, eingesetzt, die über eine drahtlose Datenverbindung, beispielsweise nach dem GSM-Standard, kommunizieren. In der Basisstation des Mobilfunknetzes, dem Mobile Switching Center, wird die Datenverbindung auf das öffentliche Netz umgesetzt und an den zentralen Datenserver des Unternehmens weitergeschaltet. Bei einem solchen Zugriff werden wichtige Firmendaten über das öffentliche Netz übertragen und können von Dritten abgehört oder verfälscht werden.

Der Erfindung liegt die Aufgabe zugrunde, die Datenverbindung über ein drahtloses Funknetz kryptografisch zu sichern.

Diese Aufgabe wird erfindungsgemäß durch die im Patentanspruch 1 beziehungsweise 2 angegebene Datenschnittstelle gelöst.

Unter kryptografischer Sicherung ist eine Ver- bzw. Entschlüsselung der übertragenen Daten, sowie gegebenenfalls eine Authentifizierung der Kommunikationsteilnehmer zu verstehen. Hierdurch ist eine gegen Abhören und Verfälschen gesicherte Datenübertragung zwischen einem tragbaren Computer und einer zentralen Datenhaltung möglich. Zur Datensicherung können in an sich bekannter Weise symmetrische und/oder unsymmetrische Verschlüsselungsverfahren verwendet werden.

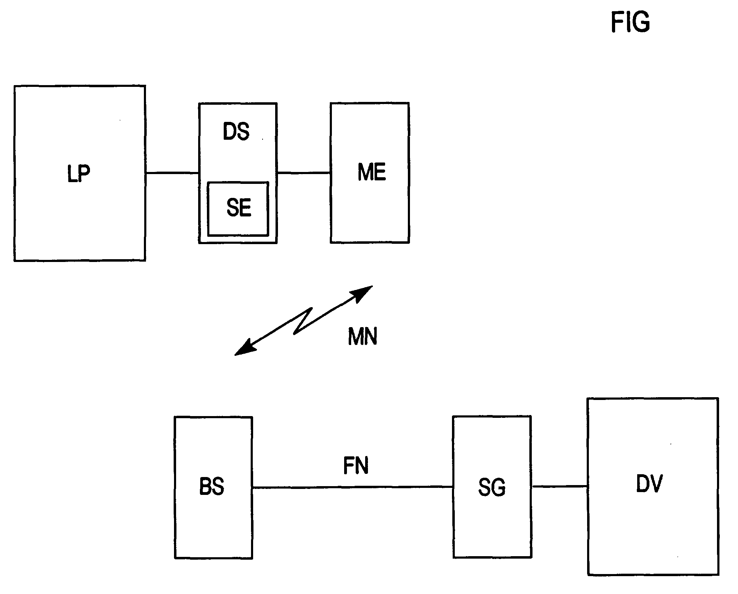

Im Folgenden wird die Erfindung anhand eines in der Zeichnung dargestellten Ausführungsbeispieles beschrieben.

In der einzigen Figur ist als ein Beispiel für eine Datenverarbeitungseinrichtung ein Laptop dargestellt, von dem aus eine gesicherte Datenverbindung zu einer Datenverarbeitungsanlage DV eingerichtet werden soll. Der Laptop LP ist über eine Datenschnittstelle DS, beispielsweise die eingangs erwähnte PCMCIA-Karte, mit einem mobilen Endgerät ME verbunden. Das mobile Endgerät oder Mobilfunkgerät bildet die Luftschnittstelle zu einem Mobilfunknetz MN. Das Mobilfunknetz kann beispielsweise nach dem GSM-Standard ausgebildet sein.

Das Mobilfunknetz weist eine Basisstation BS auf, die sogenannte Base Station System. Über die Basisstationen BS werden drahtlose Verbindungen zu weiteren mobilen Endgeräten hergestellt. Die Basisstation ist weiter mit einem sogenannten Festnetz FN verbunden. Das Festnetz FN kann ein analoges oder digitales Teilnehmernetz, beispielsweise ein ISDN Netz, sein. Als ein Kommunikationsteilnehmer im Festnetz ist eine Datenverarbeitungsanlage DV dargestellt, die über ein Schlüsselgerät SG mit diesem Festnetz FN verbunden ist.

Das Schlüsselgerät SG ist beispielsweise durch das ISDN Schlüsselgerät TopSec der Firma Siemens realisiert. Über das Schlüsselgerät SG werden die Ver- und Entschlüsselung durchgeführt, sowie die weiteren für den Schlüsselbetrieb und Authentifizierung notwendigen Verfahrensschritte durchgeführt. Diese Einzelheiten sind für die Erfindung von untergeordneter Bedeutung und daher in der Figur nicht näher dargestellt.

Erfindungsgemäß weist die Datenschnittstelle DS eine Schlüsseleinrichtung SE auf. Diese Schlüsseleinrichtung SE ist in ähnlicher Weise wie das Schlüsselgerät SG zur Ver- und Entschlüsselung der zu sichernden Daten, sowie bedarfsweise zur Authentifizierung der Kommunikationsteilnehmer ausgebildet. Die Schlüsseleinrichtung SE weist beispielsweise einen Schlüsselspeicher auf, der zusammen mit einem digitalen Signalprozessor (in der Figur nicht dargestellt) die kryptografischen Funktionen ausführt.

Weiter ist die Datenschnittstelle DS erfindungsgemäß zur Unterstützung des V.110 Datenübertragungs-Protokolls ausgebildet. Hierdurch ist eine transparente Datenverbindung zu einem Kommunikationsteilnehmer im Mobilfunknetz MN oder in einem daran angeschalteten Festnetz FN schaltbar. Über diese Datenverbindung können verschlüsselte Daten übertragen werden.

Die Datenkommunikation zwischen Laptop LP und mobilem Endgerät ME erfolgt beispielsweise mit einer für das mobile Endgerät ME spezifischen PCMCIA-Karte, der Datenschnittstelle DS. Die Verbindung zwischen Laptop LP und mobilem Endgerät ME kann auch direkt über eine V.24 Verbindung hergestellt werden, die aber hier nicht weiter betrachtet werden soll. Für die Sicherung der Datenverbindung kommt die erfindungsgemäße Datenschnittstelle DS zum Einsatz, die zusätzlich zur Schnittstelle zum mobilen Endgerät ME die für den Schlüsselbetrieb notwendigen Kryptofunktionen enthält.

Zwischen dem öffentlichen ISDN Netz, dem Festnetz FN, und dem zentralen Datenserver der Datenverarbeitungsanlage DV, ist das Schlüsselgerät SG in die S₀- beziehungsweise S_{2M}-Verbindung geschaltet. Hierdurch kann die Datenverarbeitungsanlage DV mit bis zu 30 Amtsleitungen über ein TopSec mit dem Festnetz FN verbunden werden. Dieses Schlüsselgerät SG ist ein für die Kommunikation mit GSM Endgeräten taugliches ISDN Schlüsselgerät mit einer Unterstützung des V.110 Datenübertragungs-Protokolls.

Für eine gesicherte Kommunikation baut der Benutzer von seinem Laptop LP aus eine Datenverbindung zur Datenverarbeitungsanlage DV auf. Der auf der Datenschnittstelle DS implementierte Sicherungsmechanismus fängt diesen Verbindungsaufbau zunächst ab, und baut eine Verbindung zu dem Schlüsselgerät SG auf. Dazu wird das V.110 Übertragungsprotokoll verwendet, welches eine transparente Verbindung zwischen den GSM- und den ISDN-Teilnehmern zur Verfügung stellt.

Über diese Verbindung wird ein Schlüsselaustausch durchgeführt, der eine gegenseitige Authentisierung beinhalten kann. Dazu wird das gleiche Verfahren eingesetzt, wie es bei dem TopSec Gerät verwendet wird. Nach Aufbau der gesicherten Verbindung wird diese für eine Datenkommunikation zwischen Laptop und LP und Datenverarbeitungsanlage DV freigeschaltet.

Neben diesem Einsatzfall zur Datensicherung von Terminals in GSM Netzen können nach gleichem Prinzip auch Daten aus analogen Netzen zu einer Datenverarbeitungsanlage DV beziehungsweise Server im ISDN Netz gesichert werden. Dazu muss die Datenschnittstelle DS bzw. die PCMCIA-Karte statt mit einer Schnittstelle zu einem GSM-Endgerät mit einem a/b-Adapter ausgestattet sein, wie es bei handelsüblichen Modem-Karten der Fall ist. Zur Übertragung von Daten zwischen analogem und ISDN Netz wird z.B. das V.32 Übertragungsprotokoll verwendet. Dieses Verfahren erfordert neben der Unterstützung des V.110 Protokolls eine Unterstützung z.B. des V.32 Protokolls in dem Schlüsselgerät SG.

Unter der Verwendung der erfindungsgemäßen Datenschnittstelle DS können mit diesem Verfahren Inhalte von Datenbanken oder ähnlichen auch ausserhalb eines Unternehmens im mobilen Einsatz abgerufen werden, ohne dass diese Daten durch Dritte aufgezeichnet oder verfälscht werden können.

## Patentansprüche

1. Datenschnittstelle (DS), insbesondere PCMCIA-Karte, zur Verbindung einer Datenverarbeitungseinrichtung (LP) über eine nachgeschaltete Luftschnittstelle (ME) mit einem drahtlosen Kommunikationsnetz (MN),
**gekennzeichnet durch**
Mittel zur Unterstützung einer transparenten Datenverbindung zu einem Kommunikationsteilnehmer, und
Mittel zur kryptografischen Sicherung (SE) der Daten.

2. Datenschnittstelle (DS), insbesondere PCMCIA-Karte, zur Verbindung einer Datenverarbeitungseinrichtung (LP) über einen a/b-Adapter mit einem analogen Kommunikationsnetz (FN)
**gekennzeichnet durch**
Mittel zur Unterstützung einer transparenten Datenverbindung zu einem Kommunikationsteilnehmer, und
Mittel zur kryptografischen Sicherung (SE) der Daten.
